# EUROPÄISCHE PATENTSCHRIFT

(11) **EP 3 685 650 B1**
(45) Veröffentlichungstag und Bekanntmachung des Hinweises auf die Patenterteilung: **20.12.2023**
(21) Anmeldenummer: 20153596.0
(22) Anmeldetag: 24.01.2020
(51) Int. Cl.: A01B 79/00, A01D 41/127

(54) **VERFAHREN ZUR KALIBRIERUNG EINES SENSORS ZUR ERFASSUNG DER AKTUELLEN FAHRGESCHWINDIGKEIT EINES AN EINEN TRAKTOR ANGEBAUTEN ANBAUGERÄTS**
METHOD FOR CALIBRATING A SENSOR FOR DETECTING THE ACTUAL FORWARD SPEED OF AN IMPLEMENT MOUNTED TO A TRACTOR
PROCÉDÉ D'ÉTALONNAGE D'UN CAPTEUR POUR LA DÉTECTION DE LA VITESSE D'AVANCEMENT RÉELLE D'UN OUTIL MONTE SUR UN TRACTEUR

(30) Priorität: 25.01.2019 DE 102019101842
(43) Veröffentlichungstag der Anmeldung: 29.07.2020
(73) Patentinhaber: Lemken GmbH & Co KG, 46519 Alpen (DE)
(72) Erfinder: Düpmann, Jörg, 46499 Hamminkeln (DE); Genneper, Gregor, 46519 Alpen (DE)

(56) Entgegenhaltungen:
- WO-A1-98/42178
- DE-A1-102014 102 027
- DE-A1-102015 223 626
- DE-C1- 19 604 812
- US-A- 6 070 539

## Beschreibung

Die vorliegende Erfindung bezieht sich auf ein Verfahren zur Kalibrierung eines Sensors zur Erfassung der aktuellen Fahrgeschwindigkeit eines an einen Traktor angebauten Anbaugerätes, das Anbaugerät weist eine ECU auf, das die Funktionen des Anbaugeräts steuert, und der Sensor ist mit der ECU des Anbaugeräts verbunden und sendet Sensorsignale an die ECU, die die ECU des Anbaugeräts in softwaregesteuerten Steuer- und Regelvorgängen als vom Sensor aktuell gemessene Geschwindigkeitswerte weiterverarbeitet.

Die Erfindung bezieht sich auch auf ein landwirtschaftliches Anbaugerät zum Anbau an einen Traktor, das einen Sensor zur Erfassung der aktuellen Fahrgeschwindigkeit aufweist, der an eine ECU zur Steuerung und Regelung von Arbeitsfunktionen des Anbaugeräts angeschlossen ist, wobei der Sensor Sensorsignale an die ECU sendet, die die ECU des Anbaugeräts in softwaregesteuerten Steuer- und Regelvorgängen als vom Sensor aktuell gemessene Geschwindigkeitswerte weiterverarbeitet.

Für die präzise Steuerung von traktorgezogenen Anbaugeräten wird es zunehmend wichtiger, die aktuell gefahrene Geschwindigkeit des Anbaugeräts zu kennen und in die Steuerungs- und Regelvorgänge einfließen zu lassen. So ist es bei der Aussaat von Saatgut, der Ausbringung von Dünger und Pflanzenschutzmitteln und anderen landwirtschaftlichen Arbeitsvorgängen wichtig, die Taktrate der Ablage und/oder die vom Anbaugerät aktuell abgegebenen Ausbringmengen an die gefahrene Geschwindigkeit anzupassen, um über die bearbeitete Fläche hinweg eine möglichst genaue Aussaat und/oder Ausbringung sicher zu stellen. Wird die Taktrate der Aussaat und/oder die Ausbringmenge nicht an jeweils wechselnde Fahrgeschwindigkeiten angepasst, ergeben sich zwangsläufig ungleiche Ausbringmengen pro Flächeneinheit entlang der bearbeiteten Fläche. Wird bei der Aussaat oder der Ausbringung von Dünger oder Pflanzenschutz eine vorher erstellte Schlagkarte abgearbeitet, in der die Aussaat und/oder die Ausbringmengen präzise geplant sind, können sich Abweichungen der Ist-Werte von der Planung ergeben, wenn mit einer festen Taktrate der Aussaat und/oder der Ausbringmenge gearbeitet wird und dabei die tatsächliche Fahrgeschwindigkeit aber über oder unterhalb der zur Realisierung der geplanten Taktrate und/oder den Ausbringmengen passenden Fahrgeschwindigkeit liegt, oder wenn nicht mit kontinuierlich gleichbleibenden Geschwindigkeiten gefahren wird. Wenn die ausgeführten Arbeiten dokumentiert werden sollen, können sich in der Dokumentation ebenfalls erhebliche Fehler ergeben, wenn bei der Erstellung der Dokumentation von Geschwindigkeiten ausgegangen wird, die nicht den tatsächlich gefahrenen Geschwindigkeiten entsprechen.

Radarsensoren verfügen eigentlich über eine stabile und dauerhaft genaue Signalqualität. Je nach Montageposition und Abstrahlwinkel der Radarstrahlung des Radarsensors können sich jedoch Messfehler ergeben, die zu fehlerhaften Geschwindigkeitswerten führen. Radarsensoren müssen deshalb nach dem Anbau an ein Gerät kalibriert werden, um eine hohe Genauigkeit der Sensorsignale sicherzustellen. Wurde die Position des Radarsensors auf dem Anbaugerät verändert, beispielsweise durch einen Anstoß an ein Hindernis oder einen Umbau am Anbaugerät, muss der Radarsensor erneut kalibriert werden, um ausreichend genaue Messergebnisse sicherzustellen.

Bei landwirtschaftlichen Anbaugeräten ist es bekannt, einen vorhandenen Geschwindigkeitssensor über eine 100 m-Fahrstrecke nach Bedarf zu kalibrieren. Die 100 m-Messtrecke muss dazu vorher genau ausgemessen worden sein. Um den Geschwindigkeitssensor zu kalibrieren, muss die 100 m-Fahrstrecke möglichst genau mit dem Anbaugerät abgefahren werden. Danach wird geprüft, ob der Sensorwert des verwendeten Geschwindigkeitssensors die 100 m widerspiegelt. Bei festgestellten Abweichungen muss der vom Geschwindigkeitssensor ermittelte Messwert mit einem aus der Messung ermittelten Korrekturfaktor verrechnet werden, um die festgestellte Abweichung zu kompensieren.

Aus der Schrift DE 10 2014 102 027 ist es bekannt, die Fahrgeschwindigkeit eines Anbaugeräts über ein Laufrad und einen Radarsensor zu messen und aus beiden Messwerten eine gültige Fahrgeschwindigkeit zu bestimmen. Das System setzt allerdings voraus, dass immer ein Laufrad vorhanden ist, das einen zweiten Messwert für die gefahrene Geschwindigkeit bereitstellt. Das System befindet sich zudem in einem ständigen Dauerkonflikt, entscheiden zu müssen, welcher der verfügbaren Geschwindigkeitswerte denn der "richtigere" ist, wobei sich dabei das System auch häufiger für den fehlerhafteren Geschwindigkeitswert entscheiden kann, ohne dass dies dem Benutzer auffällt. Das gilt insbesondere auch deshalb, weil das System automatisch gesteuert wird und der Benutzer nicht merkt, welcher Sensorwert aktuell dem laufenden Bearbeitungsvorgang zu Grunde gelegt wird. Daraus resultiert eine hohe Fehleranfälligkeit des Systems.

Die Kalibrierung eines Geschwindigkeitssensors über eine 100 m-Messung mit der Ermittlung und Anwendung eines Korrekturfaktors auf die vom Sensor ermittelten Geschwindigkeitswerte führt, wenn sie genau durchgeführt worden ist, zu hinreichend genauen Daten über die tatsächlich gefahrenen Geschwindigkeiten. Es ist aber schwierig, die 100 m-Messung genau durchzuführen. Schon das genaue Messen der 100 m Streckenlänge erfordert einigen Aufwand, insbesondere bei schlechtem Wetter oder unebenen Bodenverhältnissen. Bei der Messung ist eine zweite Person erforderlich, damit die Start- und Ziellinien mit der Mitte des Vorderreifens genau getroffen werden.

Es ist die Aufgabe der vorliegenden Erfindung, ein zur Steuerung eines Anbaugeräts weiterverarbeitetes Geschwindigkeitssignal möglichst genau zu ermitteln.

Die Aufgabe wird durch ein Verfahren nach Anspruch 1 gelöst, indem die ECU des Anbaugeräts ein Softwareprogramm aufweist, das bei einer Fahrbewegung des Traktors über eine Messstrecke hinweg in einem Kalibriermodus aus einer anderen Quelle als dem mit der ECU verbundenen Sensor über eine Schnittstelle verfügbare, die Fahrbewegung abbildende Geschwindigkeits- und/oder Streckensignale als Referenzwerte ausliest, den ausgelesenen Geschwindigkeits- und/oder Streckensignalen entsprechende Geschwindigkeits- und/oder Streckenwerte mit den den Sensorsignalen des Sensors entsprechenden Geschwindigkeitswerten vergleicht, bei einer Differenz zwischen den den ausgelesenen Geschwindigkeits- und/oder Streckensignalen entsprechenden Geschwindigkeits- und/oder Streckenwerten und den den Sensorsignalen des Sensors entsprechenden Geschwindigkeitswerten einen Korrekturfaktor errechnet, bei dessen Verrechnung mit den Sensorsignalen des Sensors diese an die den ausgelesenen Geschwindigkeits- und/oder Streckensignalen entsprechenden Geschwindigkeits- und/oder Streckenwerte angeglichen werden, das Softwareprogramm den im Kalibriermodus ermittelten Korrekturfaktor an die ECU des Anbaugeräts übermittelt und die ECU die vom Sensor empfangene Sensorsignale nur unter Verrechnung mit diesem Korrekturfaktor weiterverarbeitet.

Die Erfindung wird weiterhin durch ein landwirtschaftliches Anbaugerät nach Anspruch 12 gelöst, indem die ECU des Anbaugeräts ein Softwareprogramm zur Ausführung des in Anspruch 1 genannten Verfahrens aufweist.

Die Kalibrierung des Sensors erfolgt erfindungsgemäß während einer Fahrt des Traktors, indem die Sensorsignale des Sensors mit über eine Schnittstelle verfügbaren, die Fahrbewegung abbildenden Geschwindigkeits- und/oder Streckensignale als Referenzwerte verglichen werden. Das Softwareprogramm kann während des Kalibriervorgangs in einem Kalibriermodus betrieben werden, in dem der Korrekturfaktor ermittelt wird, mit dem die Sensorwerte des Sensors multipliziert werden müssen, um hinreichend genau für die Steuerung des Anbaugeräts zu sein. Der Kalibriermodus kann automatisch oder durch eine entsprechende Bedieneingabe aktiviert werden. Es ist nicht mehr erforderlich, eine genau 100 m lange Referenzstrecke auszumessen und daran entlang zeitaufwendige Messfahrten durchzuführen. Der Fahrer muss die Traktorkabine für die Kalibrierung nicht mehr verlassen, und es ist auch keine zweite Person für Hilfestellungen erforderlich. Es kommt auch nicht mehr zu Konflikten zwischen verschiedenen Sensoren. Ist der mit der ECU des Anbaugeräts verbundene Sensor einmal kalibriert, kann er als einziger Sensor genutzt werden, um der ECU genaue Sensorsignale zu übermitteln, die die ECU als Messwerte für die aktuell gefahrene Geschwindigkeit zur Steuerung des Anbaugeräts weiterverarbeiten kann.

Die bei der Kalibrierung als Referenzwerte genutzten, über eine Schnittstelle verfügbar gemachten, die Fahrbewegung abbildende Geschwindigkeits- und/oder Streckensignale aus einer anderen Quelle können von unterschiedlichsten beliebigen Geschwindigkeits-Messgeräten stammen. Die Geschwindigkeit kann beispielsweise über traktorseitige Geschwindigkeitssensoren gemessen werden, wie Drehzahlmesser an Wellen, Achsen, in Getrieben oder dergleichen, es kann sich um einen traktorseitigen Radarsensor handeln, der ein Geschwindigkeitssignal aus der Bodenabtastung mit den Radarstrahlen ableitet, oder es werden die Positionsdaten von Satelliten genutzt, die über GNNS-Antennen, GNNS-Modems oder ein Mobiltelefon mit GNNS-Empfang aufgefangen und von der ECU zu Positions- und/oder Geschwindigkeitsdaten weiterverarbeitet werden können. Diese Geschwindigkeits- und/oder Streckensignale können auf vielfältige Weise über eine Schnittstelle der ECU verfügbar gemacht werden. So ist es möglich, die Daten über eine drahtlose Funkverbindung vom betreffenden Sensor an die Schnittstelle zu übermitteln. Die Übermittlung der als Referenzwerte genutzten Geschwindigkeits- und/oder Streckensignale kann aber auch über ein Kabel oder optisch durch Licht- oder akustische Signale, wie beispielsweise per Ultraschall, oder auf eine sonstige geeignete Weise an die Schnittstelle erfolgen.

Bei der Schnittstelle, über die die Referenzwerte verfügbar gemacht werden, handelt es sich zunächst um eine Software-basierte Schnittstelle des Softwareprogramms, über die das Softwareprogramm die Referenzwerte zur Weiterverarbeitung einlesen kann. Die softwareseitige Schnittstelle greift auf körperliche Übertragungselemente zu, über die der Datenaustausch abgewickelt wird und die eine jeweilige physische Schnittstelle ausbilden. Dabei kann es sich um Kabel und Stecker handeln, über die das Softwareprogramm mit seiner softwareseitigen Schnittstelle an das Busnetz, an Antennen, Funkmodule oder dergleichen angeschlossen ist, um darüber die aus einer anderen Quelle als dem mit der ECU verbundenen Sensor stammenden Geschwindigkeits- und/oder Streckensignale auszulesen.

Die Kalibrierung des Sensors kann über den Vergleich von Geschwindigkeitswerten, Entfernungswerten der als Messstrecke zurückgelegten Wegstrecke oder aus beiden Datensätzen zusammen erfolgen. Wenn nicht beide Datensätze als Referenzwerte verfügbar sind, ist eine Kalibrierung auch nur über einen der beiden Datensätze möglich.

Wichtig ist, dass das für die Kalibrierung verwendete Geschwindigkeits- und/oder Streckensignal eine zum Zeitpunkt der Kalibrierung ausreichende Messgenauigkeit aufweist. So ist es beispielsweise bei GNNS-Signalen möglich, dass diese örtlich oder zeitlich begrenzt durch schlechten Empfang oder eine künstlich erzeugte Ungenauigkeit nicht die Genauigkeit aufweisen, die für eine Kalibrierung erforderlich ist. Die Kalibrierung kann aber an einem Ort zu einem Zeitpunkt durchgeführt werden, an dem das GNNS-Signal ausreichend genau ist. So kann die Kalibrierung beispielsweise in einer Gegend durchgeführt werden, in der ein Korrektursender für das GNNS-Signal verfügbar ist, durch den eine ausreichende Genauigkeit gesichert ist. Raddrehzahlen als Referenzwerte sind ungeeignet, wenn das gemessene Rad während der Messung mit Schlupf betrieben wird, beispielsweise auf nassen Böden. Die Genauigkeit der für eine Kalibrierung verfügbaren Referenzwerte kann vom Fahrer gut eingeschätzt werden, beispielsweise, wenn die Referenzwerte auch für andere Funktionen des Traktors genutzt werden, wie beispielsweise einen Lenkautomaten, Parallelfahrt-Hilfen, etc.. Der Traktorfahrer kann gut sehen, ob sich beispielsweise Überlappungen der Fahrspuren ergeben oder nicht.

Mit dem Korrekturfaktor können die vom Sensor ermittelten und an die ECU übermittelten Sensorwerte um das Maß korrigiert werden, um das sie von den Referenzwerten abweichen. Wenn der Sensor des Anbaugeräts beispielsweise eine Geschwindigkeit von 10 km/h meldet und das Referenzsignal eine Geschwindigkeit von 11 km/h, so beträgt der Korrekturfaktor 1,1, mit dem die Werte des Sensors nach erfolgter Kalibrierung multipliziert werden, bevor sie von der ECU weiterverarbeitet werden. Die Abweichung des Sensorsignals um 10 % von den Referenzwerten kann während der Kalibrierung vom Softwareprogramm durch eine geeignete Programmierung festgestellt werden. Die vom Sensor übermittelten Messwerte für die Geschwindigkeit und/oder Strecke werden von der ECU des Anbaugeräts nach der Bereitstellung des Korrekturfaktors einfach mit diesem verrechnet, so dass die ECU nun die Steuerung und Regelung von Komponenten des Anbaugeräts auf Basis genauerer Geschwindigkeits- und/oder Streckensignale vornehmen kann. Soweit über die ECU des Anbaugeräts ausgeführte Arbeitsvorgänge dokumentiert werden, können auch diese unter Nutzung der verbesserten Qualität der Sensordaten für die Geschwindigkeit und/oder zurückgelegten Strecke abgespeichert werden.

Ist der Korrekturfaktor bekannt, ist so lange keine neue Kalibrierung erforderlich, wie sich die Position und Lage des Sensors an dem Anbaugerät nicht verändert. Um eine Kalibrierung durchführen zu können, genügt es, wenn ein Referenzsignal nur für die Dauer der Kalibrierung verfügbar ist. Es muss also nicht dauernd während des Gebrauchs des Anbaugeräts ein Referenzsignal verfügbar sein.

Nach einer Ausgestaltung der Erfindung weist der Traktor ein dem ISOBUS-Standard entsprechendes Busnetz und eine TECU mit einer damit verbundenen ISOBUS-Schnittstelle auf, das Anbaugerät weist eine ECU auf, die während des Betriebs des Anbaugeräts über eine ISOBUS-Schnittstelle mit dem Busnetz des Traktors verbunden ist, die TECU des Traktors oder ein anderer an das Busnetz angeschlossener Netzknoten sendet kontinuierlich Geschwindigkeits- und/oder Streckensignale in das Busnetz des Traktors und/oder des Anbaugeräts, die einem Wert der vom Traktor aktuell gefahrenen Geschwindigkeit und/oder zurückgelegten Strecke entsprechen und die an der ISOBUS-Schnittstelle verfügbar sind, über die die ECU an das Busnetz des Traktors angeschlossen ist, und das Softwareprogramm liest aus dem Busnetz die von der TECU des Traktors gesendeten Geschwindigkeits- und/oder Streckensignale als Referenzwerte aus.

Bei dieser Lösung wird das nach dem ISOBUS-Standard im Busnetz des Traktors verfügbare Geschwindigkeitssignal als Referenzsignal genutzt, um eine Kalibrierung des an die ECU des Anbaugeräts angeschlossenen Sensors vorzunehmen. Das ist möglich, wenn der Traktor eine Fahrzeugelektronik aufweist, die dem ISOBUS-Standard nach der Norm ISO 11783 entspricht. Traktoren, die diesem Standard nicht entsprechen und bei denen ein entsprechendes Geschwindigkeitssignal fehlt, kommen für eine solche Kalibrierung nicht in Betracht. Da aber der Sensor in einer Einbauposition nur einmal kalibriert werden muss, um ausreichend genaue Geschwindigkeitssignale zu liefern, ist es möglich, das Anbaugerät kurzzeitig für eine Kalibrierung an einen Traktor anzubauen, dessen Fahrzeugelektronik dem ISOBUS-Standard entspricht. Ein solcher Traktor kann leicht bereitgestellt werden, beispielsweise bei einem Händler, der die Anbaugeräte wartet, oder innerhalb eines landwirtschaftlichen größeren Betriebs mit mehreren Traktoren, im Rahmen von Maschinenringen oder einer Nachbarschaftshilfe. Nach erfolgreicher Kalibrierung kann das Anbaugerät wieder mit Traktoren betrieben werden, die nicht dem ISOBUS-Standard entsprechen, weil die ECU des Anbaugeräts die Sensorsignale ja nach erfolgter Kalibrierung mit dem dann bekannten Korrekturfaktor verrechnen kann. Nach erfolgter Kalibrierung kann das Anbaugerät mit beliebigen Traktoren betrieben werden, da der ECU des Anbaugeräts ja der aktuell benötigte Korrekturfaktor aus der vorherigen Kalibrierung bekannt ist.

Nach einer Ausgestaltung der Erfindung handelt es sich bei dem Sensorsignal um ein getaktetes Ausgangssignal. Ein getaktetes Signal wird beispielsweise auch von einem Lasersensor erzeugt, von Zahnrädern einer Getriebe- oder Radwelle, und dergleichen. Bei einem getakteten Signal können die Zahlen der Impulse leicht gezählt und danach in Vergleichen ausgewertet werden.

Nach einer Ausgestaltung der Erfindung berücksichtigt das Softwareprogramm im Kalibriermodus die während einer Mindestfahrstrecke des Traktors von 50 m an der ISOBUS-Schnittstelle auslesbaren Geschwindigkeits- und/oder Streckensignale für die Ermittlung eines Korrekturfaktors. Über eine Fahrstrecke von 50 m können schon so viele Taktsignale empfangen werden, dass auf deren Basis eine Korrektur der Sensorwerte möglich ist.

Nach einer Ausgestaltung der Erfindung wird der Kalibriermodus automatisch beim Absenken des Anbaugeräts auf den Boden und/oder beim Einschalten eines Antriebs des Anbaugeräts und/oder automatisch unter Berücksichtigung sonstiger im Softwareprogramm programmierten Auslösekriterien eingeschaltet. Bei einer automatisch an einer wiederkehrenden Aktion des Anbaugeräts anknüpfenden Aktivierung des Kalibriermodusses kann dieser nicht von einem zerstreuten oder unerfahrenen Traktorfahrer vergessen werden. Da der Kalibriermodus nicht lange andauert, wird dadurch die Betriebsbereitschaft des Traktors kaum beeinträchtigt. Bei der automatisch ausgelösten Kalibrierung ist sichergestellt, dass die ECU fast immer steuerungstechnisch über genaue Daten über die gefahrene Geschwindigkeit verfügt. Das gilt auch dann, wenn der Sensor unbemerkt seine Lage verändert haben sollte, ohne dass das der Traktorfahrer bemerkt hat, beispielsweise bei einem Anfahrschaden an ein fremdes Hindernis.

Nach einer Ausgestaltung der Erfindung ist der Kalibriermodus über die Eingabe eines Bedienbefehls in die Steuerungssoftware des Traktors und/oder in die Steuerungssoftware des Anbaugeräts aktivierbar. Bei der wahlweisen Aktivierungsmöglichkeit kann ein Traktorfahrer die Kalibrierung immer dann auslösen, wenn ihm das sinnvoll erscheint.

Nach einer Ausgestaltung der Erfindung wird der Kalibriermodus nach Erreichen einer Mindestfahrstrecke des Traktors automatisch abgeschaltet. Die automatische Abschaltung des Kalibriermodusses nach einer Mindestfahrstrecke verhindert, dass sich ein einmal ermittelter Korrekturfaktor unbemerkt während der weiteren Bearbeitung eines Feldes noch erheblich verändert und dadurch über die Feldfläche gesehen unterschiedliche Aussaat- beziehungsweise Düngemengen ausgebracht werden.

Nach einer Ausgestaltung der Erfindung wird der Kalibriermodus abgeschaltet, wenn sich der nach dem Ablauf einer vorgegebenen Kalibrierzeit oder einer vorgegebenen Kalibrierstrecke ermittelte Korrekturfaktor unter Berücksichtigung von weiteren an der ISOBUS-Schnittstelle auslesbaren Geschwindigkeits- und/oder Streckensignale nicht mehr oder nur noch unwesentlich verändert. Die dem Kriterium der Konvergenz folgende automatische Abschaltung verhindert, dass der Kalibriermodus unnötig lange aktiviert bleibt.

Nach einer Ausgestaltung der Erfindung ist der Kalibriermodus nach der Mindestfahrstrecke über die Eingabe eines Bedienbefehls in die Steuerungssoftware des Traktors und/oder des Anbaugeräts zu beenden. Es ist vorteilhaft, wenn ein Traktorfahrer eine Einflussmöglichkeit darauf hat, wie lange ein Kalibrierungsprozess andauern soll. So ist eine Abschaltmöglichkeit beispielsweise dann sinnvoll, wenn aufgrund von nassen Bodenverhältnissen oder anderer Einflussgrößen auf den Eintritt und die Größe eines Fehlers absehbar ist, dass ein bereits aktivierter Kalibrierungsvorgang keine zutreffende Bestimmung eines Korrekturfaktors ermöglichen wird. In solchen Fällen ist es besser, die Kalibrierung vorzeitig abzubrechen.

Nach einer Ausgestaltung der Erfindung verarbeitet die ECU des Anbaugeräts bei einem Ausfall oder Fehlen des Sensors die an der ISOBUS-Schnittstelle auslesbaren Geschwindigkeits- und/oder Streckensignale oder die den ausgelesenen Geschwindigkeits- und/oder Streckensignalen entsprechenden Geschwindigkeits- und/oder Streckenwerte anstelle der Sensorwerte des Sensors als Sensorwerte für die aktuell gefahrene Geschwindigkeit weiter. Bei dieser Lösung führt der Ausfall des Sensors nicht zu einem Stillstand der Maschine, sondern es ist möglich, das Anbaugerät dann mit der ECU auf Basis der Geschwindigkeitsdaten zu steuern, die über die ISOBUS-Schnittstelle für die ECU verfügbar sind.

Nach einer Ausgestaltung der Erfindung weist das Softwareprogramm eine automatisch gesteuerte oder von einer Bedieneingabe abhängige Auswahlfunktion auf, über die auswählbar ist, ob die Sensorwerte des mit dem ECU verbundenen Sensors oder die aus der anderen Quelle als dem mit dem ECU verbundenen Sensor über eine Schnittstelle verfügbare, die Fahrbewegung abbildende Geschwindigkeits- und/oder Streckensignale von der ECU des Anbaugeräts direkt zur Bestimmung der gefahrenen Geschwindigkeit weiterverarbeitet werden. Mit einer solchen Funktion kann ein Traktorfahrer oder die Programmierung des Softwareprogramms wählen, mit welchen Geschwindigkeitssignalen die ECU des Anbaugeräts gesteuert wird, wobei die direkte Verwendung der ausgewählten Geschwindigkeitssignale auch die Verrechnung dieser Geschwindigkeitssignale mit dem Korrekturfaktor ausschließt.

Diese Funktion ist beispielsweise in dem Fall sinnvoll, in dem der Korrekturfaktor falsch ermittelt wurde oder eine erneute Kalibrierung durchgeführt werden müsste, dies aktuell aber noch nicht möglich ist.

Weitere Merkmale der Erfindung ergeben sich aus den Ansprüchen, den Figuren und der gegenständlichen Beschreibung.

Die Erfindung wird nun anhand eines bevorzugten Ausführungsbeispiels sowie unter Bezugnahme auf die beigefügten Zeichnungen näher erläutert. Es zeigen:
- Fig. 1:: eine Kombination eines Traktors mit einem daran angehängten Anbaugerät, und
- Fig. 2:: ein Flussdiagramm eines Softwareprogramms zur Kalibrierung eines Sensors.

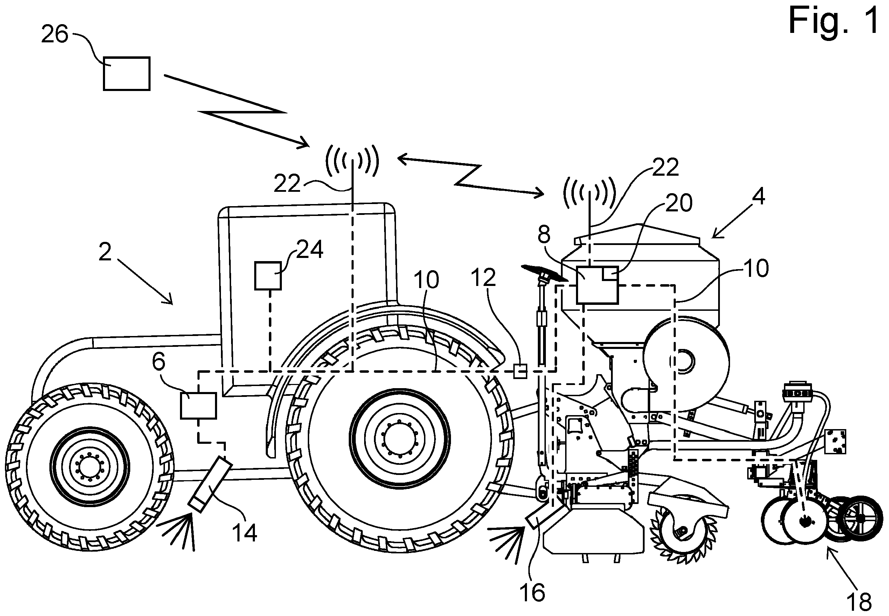

In Fig. 1 ist ein Traktor 2 gezeigt, an den ein Anbaugerät 4 angehängt ist. Bei dem Anbaugerät 4 kann es sich um ein beliebiges landwirtschaftliches Gerät handeln, das dazu dient, Bearbeitungsvorgänge auf einer landwirtschaftlich genutzten Fläche auszuführen. Insbesondere handelt es sich bei dem Anbaugerät 4 um ein Gerät, das Saatgut, Dünger, Pflanzenschutzmittel und dergleichen ausbringt.

Der im Ausführungsbeispiel gezeigte Traktor 2 verfügt über ein Busnetz 10, an das ein TECU 6 angeschlossen ist. Bei dem TECU 6 handelt es sich um ein Traktorsteuergerät, das die ISOBUS-Norm ISO 11783 erfüllt. Die TECU 6 übernimmt Daten vom Busnetz 10 des Traktors und stellt diese Informationen wie beispielsweise Fahrgeschwindigkeit, Zapfwellendrehzahl u.s.w. im ISOBUS in Form von Nachrichten mit der entsprechenden, in der Norm definierten, SBN zur Verfügung.

Das traktorseitige Busnetz 10 ist über eine Schnittstelle 12 mit dem Busnetz 10 im Anbaugerät 4 verbunden. Über die Schnittstelle 12 können zwischen dem Traktor 2 und dem Anbaugerät 4 Daten ausgetauscht werden.

Der Traktor 2 verfügt im Ausführungsbeispiel über einen Geschwindigkeitssensor 14. Der Geschwindigkeitssensor 14 ist mit der TECU 6 verbunden und sendet Geschwindigkeitsdaten an diese weiter. Die TECU 6 kann aber abweichend vom Ausführungsbeispiel Geschwindigkeits- und/oder Entfernungsdaten auch von anderen Traktorkomponenten erhalten. Hier kommen beispielsweise Raddrehzahlen, Getriebedrehzahlen, oder Geschwindigkeitsdaten von GNNS-Systemen in Betracht. Es ist auch möglich, dass der Geschwindigkeitssensor 14 seine Sensordaten direkt in das Busnetz 10 einstellt. Das ist insbesondere dann der Fall, wenn der Traktor 2 nicht der ISOBUS-Norm entspricht. Auch andere am Traktor 2 vorhandene Geschwindigkeitsmesssysteme können ihre Daten direkt in das Busnetz 10 einstellen, anstatt diese an die TECU 6 zu senden.

Auch das Anbaugerät 4 verfügt über einen Sensor 16, mit dem die gefahrene Geschwindigkeit des Anbaugeräts 4 gemessen wird. Der Sensor 16 ist mit der ECU 8 des Anbaugerätes 4 verbunden. Die ECU 8 verwendet die Geschwindigkeitsdaten des Sensors 16, um bei Steuerungs- und Regelungsvorgängen von Komponenten des Anbaugerätes 4 die gefahrene Geschwindigkeit zu berücksichtigen. Die gefahrene Geschwindigkeit ist insbesondere von Bedeutung für die Taktraten und/oder Ausbringmengen, die eine Ausbringeinheit 18 während der Bearbeitung einer landwirtschaftlichen Fläche umsetzt. Für ein gleichmäßiges Arbeitsergebnis des Anbaugerätes 4 ist es erforderlich, die Taktraten bzw. die Ausbringmengen zu reduzieren, wenn das Anbaugerät 4 langsamer über die landwirtschaftliche Fläche bewegt wird, bzw. diese zu erhöhen, wenn mit einer höheren Geschwindigkeit gearbeitet wird. Die gefahrene Geschwindigkeit bei der Bearbeitung der landwirtschaftlichen Fläche ist auch dann zu berücksichtigen, wenn eine Applikationskarte mit einer zuvor geplanten teilflächenspezifischen Bearbeitung abzuarbeiten ist.

Die ECU 8 verfügt über ein Softwareprogramm 20, mit dem eine Kalibrierung des Sensors 16 möglich ist. Das Softwareprogramm 20 ist so programmiert, dass es bei einer Fahrbewegung des Traktors 2 über eine Messstrecke hinweg in einem Kalibriermodus betrieben werden kann. Im Kalibriermodus liest das Softwareprogramm 20 aus einer anderen Quelle als dem mit der ECU 8 verbundenen Sensor 16 über eine Schnittstelle verfügbare, die Fahrbewegung abbildende Geschwindigkeits- und/oder Streckensignale als Referenzwerte aus. Bei der Schnittstelle, von der die Referenzwerte ausgelesen werden, muss es sich nicht zwangsläufig um die Schnittstelle 12 handeln, mit der die Busnetze 10 des Traktors 2 und des Anbaugeräts 4 miteinander verbunden sind. Als Schnittstelle kommt beispielsweise auch schon ein Netzknoten, mit dem die TECU 8 an das Busnetz 10 des Anbaugeräts 4 angebunden ist, oder eine Antenne 22 in Betracht, mit der das Softwareprogramm Geschwindigkeitssignale über eine Funkverbindung vom Traktor 2 übertragen bekommt. Möglich ist es auch, über die Antenne 22 Funksignale eines GNNS-Senders 26 zu empfangen, aus denen die Geschwindigkeitswerte herausgerechnet werden. Als Antenne 22 kann die ECU 8 auch ein Mobilfunkgerät nutzen, das mit der ECU 8 verbunden ist. Die Datenquelle der Geschwindigkeitssignale, die als Referenzwerte verarbeitet werden, können von einem Bediener über einen Bedienmonitor 24 manuell oder auch softwaregesteuert automatisch ausgewählt werden.

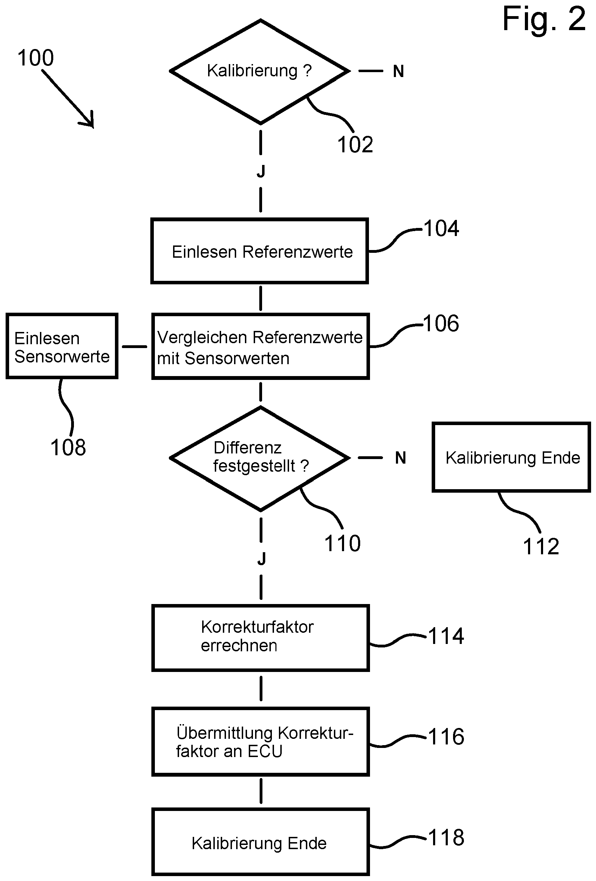

Der Programmablauf einer Kalibrierung ist in Fig. 2 näher dargestellt. Der Kalibriervorgang 100 kann am Startpunkt 102 automatisch softwaregesteuert oder manuell gestartet werden. Das Softwareprogramm 20 liest zunächst am Arbeitspunkt 104 die Referenzwerte für die Geschwindigkeits- und/oder Streckenwerte ein. Im Arbeitspunkt 106 werden die eingelesenen Referenzwerte mit den Sensorwerten des Sensors 16 verglichen, die das Softwareprogramm 20 im Arbeitsschritt 108 ebenfalls eingelesen hat. Sodann muss das Softwareprogramm 20 überprüfen, ob zwischen den Referenzwerten und den Werten des Sensors 16 eine Differenz feststellbar ist.

Wird im Arbeitsschritt 110 keine Differenz festgestellt, ist die Kalibrierung gemäß Arbeitspunkt 112 beendet. Stellt das Softwareprogramm 20 eine Differenz fest, so muss aus der Differenz zwischen den Referenzwerten und den Sensorwerten ein Korrekturfaktor im Arbeitsschritt 114 errechnet werden. Der im Arbeitsschritt 114 errechnete Korrekturfaktor wird dann im Arbeitsschritt 116 an die ECU 8 des Anbaugeräts 4 übermittelt. Für das Softwareprogramm 20 ist die Kalibrierung mit dem Arbeitsschritt 116 dann im Arbeitsschritt 118 beendet. Die ECU 8 kann den vom Softwareprogramm 20 übermittelten Korrekturfaktor bei der weiteren Verrechnung der vom Sensor 16 übermittelten Sensorwerte mit verarbeiten.

Die Erfindung ist nicht auf das vorstehend erläuterte Ausführungsbeispiel beschränkt.

Der Schutzbereich der Erfindung wird durch die folgenden Ansprüche definiert.

## Patentansprüche

1. Verfahren zur Kalibrierung eines Sensors (16) zur Erfassung der aktuellen Fahrgeschwindigkeit eines an einen Traktor (2) angebauten Anbaugerätes (4), wobei das Anbaugerät eine ECU (8) und den Sensor (16) aufweist, wobei die ECU (8) die Funktionen des Anbaugeräts (4) steuert, wobei der Sensor (16) mit der ECU (8) des Anbaugeräts (4) verbunden ist und Sensorsignale an die ECU (8) sendet, die die ECU (8) des Anbaugeräts (4) in softwaregesteuerten Steuer- und Regelvorgängen als vom Sensor (16) aktuell gemessene Geschwindigkeitswerte weiterverarbeitet, wobei die ECU (8) des Anbaugeräts (4) ein Softwareprogramm (20) zum Ausführen des Verfahrens zur Kalibrierung des Sensors (16) aufweist, welches zur Kalibrierung des Sensors (16) die Verfahrensschritte ausführt, dass
- bei einer Fahrbewegung des Traktors (2) über eine Messstrecke hinweg in einem Kalibriermodus aus einer anderen Quelle als dem mit der ECU (8) verbundenen Sensor (16) über eine Schnittstelle verfügbare, die Fahrbewegung abbildende Geschwindigkeits- und/oder Streckensignale als Referenzwerte ausgelesen werden,
- den ausgelesenen Geschwindigkeits- und/oder Streckensignalen entsprechende Geschwindigkeits- und/oder Streckenwerte mit den den Sensorsignalen des Sensors (16) entsprechenden Geschwindigkeitswerten verglichen werden,
- bei einer Differenz zwischen den den ausgelesenen Geschwindigkeits- und/oder Streckensignalen entsprechenden Geschwindigkeits- und/oder Streckenwerten und den den Sensorsignalen des Sensors (16) entsprechenden Geschwindigkeitswerten ein Korrekturfaktor errechnet wird, bei dessen Verrechnung mit den Sensorsignalen des Sensors (16) diese an die den ausgelesenen Geschwindigkeits- und/oder Streckensignalen entsprechenden Geschwindigkeits- und/oder Streckenwerte angeglichen werden,
- der im Kalibriermodus ermittelte Korrekturfaktor an die ECU (8) des Anbaugeräts (4) übermittelt wird und die ECU (8) die vom Sensor (16) empfangenen Sensorsignale nur unter Verrechnung mit diesem Korrekturfaktor weiterverarbeitet.

2. Verfahren nach Anspruch 1, **dadurch gekennzeichnet, dass** der Traktor (2) ein dem ISOBUS-Standard entsprechendes Busnetz (10) und eine TECU (6) mit einer damit verbundenen ISOBUS-Schnittstelle (12) aufweist, das Anbaugerät (4) eine ECU (8) aufweist, die während des Betriebs des Anbaugeräts (4) über eine ISOBUS-Schnittstelle (12) mit dem Busnetz (10) des Traktors (2) verbunden ist, die TECU (6) des Traktors (2) oder ein anderer an das Busnetz (10) angeschlossener Netzknoten kontinuierlich Geschwindigkeits- und/oder Streckensignale in das Busnetz (10) des Traktors (2) und/oder des Anbaugeräts (4) sendet, die einem Wert der vom Traktor (2) aktuell gefahrenen Geschwindigkeit und/oder zurückgelegten Strecke entsprechen und die an der ISOBUS-Schnittstelle (12) verfügbar sind, über die die ECU (8) an das Busnetz (10) des Traktors (2) angeschlossen ist, und das Softwareprogramm (20) aus dem Busnetz (10) die von der TECU (6) des Traktors (2) gesendeten Geschwindigkeits- und/oder Streckensignale als Referenzwerte ausliest.

3. Verfahren nach Anspruch 1 oder 2, **dadurch gekennzeichnet, dass** es sich bei dem Sensorsignal um ein getaktetes Ausgangssignal handelt.

4. Verfahren nach einem der vorhergehenden Ansprüche, **dadurch gekennzeichnet, dass** das Softwareprogramm (20) im Kalibriermodus die während einer Mindestfahrstrecke des Traktors (2) von 50 m an der ISOBUS-Schnittstelle (12) auslesbaren Geschwindigkeits- und/oder Streckensignale für die Ermittlung eines Korrekturfaktors berücksichtigt.

5. Verfahren nach Anspruch 4, **dadurch gekennzeichnet, dass** der Kalibriermodus automatisch beim Absenken des Anbaugeräts (4) auf den Boden und/oder beim Einschalten eines Antriebs des Anbaugeräts (4) und/oder automatisch unter Berücksichtigung sonstiger im Softwareprogramm (20) programmierten Auslösekriterien eingeschaltet wird.

6. Verfahren nach einem der vorhergehenden Ansprüche, **dadurch gekennzeichnet, dass** der Kalibriermodus über die Eingabe eines Bedienbefehls in die Steuerungssoftware des Traktors (2) und/oder in die Steuerungssoftware des Anbaugeräts (4) aktivierbar ist.

7. Verfahren nach einem der vorhergehenden Ansprüche, **dadurch gekennzeichnet, dass** der Kalibriermodus nach Erreichen einer Mindestfahrstrecke des Traktors (2) automatisch abgeschaltet wird.

8. Verfahren nach einem der vorhergehenden Ansprüche, **dadurch gekennzeichnet, dass** der Kalibriermodus abgeschaltet wird, wenn sich der nach dem Ablauf einer vorgegebenen Kalibrierzeit oder einer vorgegebenen Kalibrierstrecke ermittelte Korrekturfaktor unter Berücksichtigung von weiteren an der ISOBUS-Schnittstelle (12) auslesbaren Geschwindigkeits- und/oder Streckensignale nicht mehr oder nur noch unwesentlich verändert.

9. Verfahren nach einem der vorhergehenden Ansprüche, **dadurch gekennzeichnet, dass** der Kalibriermodus nach der Mindestfahrstrecke über die Eingabe eines Bedienbefehls in die Steuerungssoftware des Traktors (2) und/oder des Anbaugeräts (4) zu beenden ist.

10. Verfahren nach einem der vorhergehenden Ansprüche, **dadurch gekennzeichnet, dass** die ECU (8) des Anbaugeräts (4) bei einem Ausfall oder Fehlen des Sensors (16) die an der ISOBUS-Schnittstelle (12) auslesbaren Geschwindigkeits- und/oder Streckensignale oder die den ausgelesenen Geschwindigkeits- und/oder Streckensignalen entsprechenden Geschwindigkeits- und/oder Streckenwerte anstelle der Sensorwerte des Sensors (16) als Sensorwerte für die aktuell gefahrene Geschwindigkeit weiterverarbeitet.

11. Verfahren nach einem der vorhergehenden Ansprüche, **dadurch gekennzeichnet, dass** das Softwareprogramm (20) eine automatisch gesteuerte oder von einer Bedieneingabe abhängige Auswahlfunktion aufweist, über die auswählbar ist, ob die Sensorwerte des mit dem ECU (8) verbundenen Sensors (16) oder die aus der anderen Quelle als dem mit dem ECU (8) verbundenen Sensor (16) über eine Schnittstelle (12) verfügbare, die Fahrbewegung abbildende Geschwindigkeits- und/oder Streckensignale von der ECU (8) des Anbaugeräts (4) direkt zur Bestimmung der gefahrenen Geschwindigkeit weiterverarbeitet werden.

12. Landwirtschaftliches Anbaugerät (4) zum Anbau an einen Traktor (2), wobei das Anbaugerät (4) eine ECU (8) zur Steuerung und Regelung von Arbeitsfunktionen des Anbaugerätes (4) und einen Sensor (16) zur Erfassung der aktuellen Fahrgeschwindigkeit aufweist, wobei der Sensor (16) an die ECU (8) des Anbaugerätes zur Steuerung und Regelung von Arbeitsfunktionen des Anbaugeräts (4) angeschlossen ist, und wobei der Sensor (16) dazu ausgestattet ist, Sensorsignale an die ECU (8) zu senden, die die ECU (8) des Anbaugeräts (4) in softwaregesteuerten Steuer- und Regelvorgängen als vom Sensor (16) aktuell gemessene Geschwindigkeitswerte weiterverarbeitet, **dadurch gekennzeichnet, dass** die ECU (8) des Anbaugeräts (4) eine Schnittstelle (12) aufweist, über welche die Fahrbewegung des Traktors (2) abbildende Geschwindigkeits- und/oder Streckensignale als Referenzwerte eingelesen werden können, welche über eine Meßstrecke hinweg in einem Kalibriermodus aus einer anderen Quelle als dem mit der ECU(8) verbundenen Sensor (16) verfügbar gemacht werden, und dass die ECU (8) des Anbaugerätes (4) ein Softwareprogramm (20) zur Ausführung des in Anspruch 1 genannten Verfahrens aufweist.

13. Landwirtschaftliches Anbaugerät (4) nach Anspruch 12, **dadurch gekennzeichnet, dass** das Softwareprogramm (20) nach den Merkmalen eines oder mehrerer der vorstehenden Ansprüche 2 bis 11 ausgestaltet ist.

## Claims

1. A method for calibrating a sensor (16) for detecting the actual traveling speed of an implement (4) mounted to a tractor (2), wherein the implement has an ECU (8) and the sensor (16), wherein the ECU (8) controls the functions of the implement (4), wherein the sensor (16) is connected to the ECU (8) of the implement (4) and sends sensor signals to the ECU (8), which the ECU (8) of the implement (4) further processes into speed values, which are actually measured by the sensor (16), in software-controlled control and regulating processes, wherein the ECU (8) of the implement (4) has a software program (20) for executing the method for calibrating the sensor (16), which, for calibrating the sensor (16), executes the process steps that
- speed and/or distance signals, which are available via an interface and which reflect the traveling movement, are read out as reference values in response to a traveling movement of the tractor (2) across a measuring distance in a calibrating mode from a source other than the sensor (16) connected to the ECU (8),
- speed and/or distance values corresponding to the read-out speed and/or distance signals are compared to the speed values corresponding to the sensor signals of the sensor (16),
- in the case of a difference between the speed and/or distance values corresponding to the read-out speed and/or distance signals and the speed values corresponding to the sensor signals of the sensor (16), a correction factor is calculated, during the calculation of which with the sensor signals of the sensor (16) the latter are adapted to the speed and/or distance values corresponding to the read-out speed and/or distance signals,
- the correction factor determined in the calibrating mode is transmitted to the ECU (8) of the implement (4), and the ECU (8) are further processed the sensor signals received from the sensor (16) only by offsetting them against this correction factor.

2. The method according to claim 1, **characterized in that** the tractor (2) has a bus network (10) corresponding to the ISOBUS standard and a TECU (6) comprising an ISOBUS interface (12) connected thereto, the implement (4) has an ECU (8), which is connected to the bus network (10) of the tractor (2) via an ISOBUS interface (12) during the operation of the implement (4), the TECU (6) of the tractor (2) or another network node connected to the bus network (10) continuously sends speed and/or distance signals into the bus network (10) of the tractor (2) and/or of the implement (4), which speed and/or distance signals correspond to a value of the speed actually traveled and/or distance actually covered by the tractor (2) and which are available at the ISOBUS interface (12), via which the ECU (8) is connected to the bus network (10) of the tractor (2), and the software program (20) reads out the speed and/or distance signals sent by the TECU (6) of the tractor (2) from the bus network (10) as reference values.

3. The method according to claim 1 or 2, **characterized in that** the sensor signal is a clocked output signal.

4. The method according to one of the preceding claims, **characterized in that** in the calibrating mode, the software program (20) considers the speed and/or distance signals, which can be read out at the ISOBUS interface (12) during a minimum travelling distance of the tractor (2) of 50 m, for the determination of a correction factor.

5. The method according to claim 4, **characterized in that** the calibrating mode is turned on automatically in response to lowering the implement (4) to the bottom and/or in response to turning on a drive of the implement (4) and/or automatically in consideration of other trigger criteria programmed in the software program (20).

6. The method according to one of the preceding claims, **characterized in that** the calibrating mode can be activated via the input of an operating command into the control software of the tractor (2) and/or into the control software of the implement (4).

7. The method according to one of the preceding claims, **characterized in that** the calibrating mode is turned off automatically after reaching a minimum travelling distance of the tractor (2).

8. The method according to one of the preceding claims, **characterized in that** the calibrating mode is turned off when the correction factor determined after the expiration of a predetermined calibrating time or a predetermined calibrating distance no longer changes or only still changes insignificantly in consideration of further speed and/or distance signals, which can be read out at the ISOBUS interface (12).

9. The method according to one of the preceding claims, **characterized in that** the calibrating mode is to be ended after the minimum travelling distance via the input of an operating command into the control software of the tractor (2) and/or of the implement (4).

10. The method according to one of the preceding claims, **characterized in that** in case of a failure or absence of the sensor (16), the ECU (8) of the implement (4) further processes the speed and/or distance signals, which can be read out at the ISOBUS interface (12) or the speed and/or distance values corresponding to the read-out speed and/or distance signals instead of the sensor values of the sensor (16) as sensor values for the actually traveled speed.

11. The method according to one of the preceding claims, **characterized in that** the software program (20) has a selection function, which is automatically controlled or which is a function of an operating input, via which it can be selected whether the sensor values of the sensor (16) connected to the ECU (8) or the speed and/or distance signals, which reflect the traveling movement and which are available via an interface (12) from the source other than the sensor (18) connected to the ECU (8), are further processed directly for determining the traveled speed by the ECU (8) of the implement (4).

12. An agricultural implement (4) for mounting to a tractor (2), wherein the implement (4) has an ECU (8) for controlling and regulating operating functions of the implement (4), and a sensor (16) for detecting the actual travelling speed, wherein the sensor (16) is connected to the ECU (8) of the implement to control and regulate operating functions of the implement (4), and wherein the sensor (16) is equipped to send sensor signals to the ECU (8), which the ECU (8) of the implement (4) further processes into speed values, which are actually measured by the sensor (16), in software-controlled control and regulating processes, **characterized in that** the ECU (8) of the implement (4) has an interface (12), via which the speed and/or distance signals reflecting the travelling movement of the tractor (2) can be read in as reference values, which are made available across a measuring distance in a calibrating mode from a source other than the sensor (16) connected to the ECU (8), and that the ECU (8) of the implement (4) has a software program (20) for executing the method mentioned in claim 1.

13. The agricultural implement (4) according to claim 12, **characterized in that** the software program (20) is designed according to the features of one or several of the above claims 2 to 11.

## Revendications

1. Procédé, destiné à étalonner un capteur (16) pour détecter une vitesse de conduite actuelle d'un équipement (4) monté sur un tracteur (2), l'équipement comportant une UCE (8) et le capteur (16), l'UCE (8) commandant les fonctions de l'équipement (4), le capteur (16) étant connecté avec l'UCE (8) de l'équipement (4) et envoyant à l'UCE (8) des signaux de capteur, que l' UCE (8) de l'équipement (4) traite ultérieurement lors de processus de commande et de réglage commandés par logiciel comme étant des valeurs de vitesse mesurées actuellement par le capteur (16), l'UCE (8) de l'équipement (4) comportant un programme logiciel (20), destiné à exécuter le procédé d'étalonnage du capteur (16), lequel pour l'étalonnage du capteur (16) exécute les étapes de procédé consistant à
- lors d'un déplacement en conduite du tracteur (2), lire en tant que valeurs de mesure sur un trajet de mesure dans un mode d'étalonnage, à partir d'une autre source que le capteur (16) connecté avec l'UCE (8) des signaux de vitesse et / ou des signaux de trajet disponibles via une interface, reproduisant le déplacement en conduite,
- comparer les valeurs de vitesse et / ou de trajet correspondant aux signaux de vitesse et / ou de trajet lus avec les signaux de capteur du capteur (16),
- dans le cas d'une différence entre les valeurs de vitesse et / ou de trajet correspondant aux signaux de vitesse et / ou de trajet lus et les valeurs de vitesse correspondant aux signaux de capteur du capteur (16) , calculer une valeur corrective, lors de la compensation de laquelle avec les signaux de capteur du capteur (16), ceux-ci sont ajustés aux valeurs de vitesse et / ou de trajet correspondant aux signaux de vitesse et / ou de trajet lus,
- transférer à l'UCE (8) de l"équipement (4) le facteur de correction déterminé en mode d'étalonnage et traiter ultérieurement par l'UCE (8) les signaux de capteur réceptionnés par le capteur (16) uniquement en les compensant avec ledit facteur de correction.

2. Procédé selon la revendication 1, **caractérisé en ce que** le tracteur (2) comporte un réseau en bus (10) correspondant au standard ISOBUS et un TECU (6) pourvu d'une interface ISOBUS (12) connectée avec celui-ci, l'équipement (4) comporte une UCE (8), qui pendant le fonctionnement de l'équipement (4) est connectée par l'intermédiaire de l'interface ISOBUS (12) avec le réseau en bus (10) du tracteur (2), le TECU (6) du tracteur (2) ou un autre noeud de réseau raccordé sur le réseau en bus (10) envoie en continu dans le réseau en bus (10) du tracteur (2) de l'équipement (4) des signaux de vitesse et / ou de trajet qui correspondent à une valeur de vitesse actuellement pratiquée et / ou au trajet actuellement parcouru par le tracteur (2) et qui sont disponibles sur l'interface ISOBUS (12), par l'intermédiaire de laquelle l'UCE (8) est raccordée sur le réseau en bus (10) du tracteur (2) et le programme logiciel (20) lit dans le réseau en bus (10) en tant que valeurs de référence les signaux de vitesse et / ou de trajet envoyés par le TECU (6) du tracteur (2).

3. Procédé selon la revendication 1 ou 2, **caractérisé en ce que** le signal de capteur est un signal de sortie cadencé.

4. Procédé selon l'une quelconque des revendications précédentes, **caractérisé en ce qu'**en mode d'étalonnage, le programme logiciel (20) prend en compte pour la détermination d'un facteur de correction les signaux de vitesse et / ou de trajet lisibles pendant un trajet de déplacement minimal du tracteur (2) de 50 m sur l'interface ISOBUS (12).

5. Procédé selon la revendication 4, **caractérisé en ce que** lors de l'abaissement de l'équipement (4) sur le sol et / ou lors de la mise en route d'un entraînement de l'équipement (4), le mode d'étalonnage est mis en route automatiquement, et / ou automatiquement sous prise en compte d'autres critères de déclenchement programmés dans le programme logiciel (20).

6. Procédé selon l'une quelconque des revendications précédentes, **caractérisé en ce que** le mode d'étalonnage est activable via la saisie d'une instruction de commande dans le logiciel de commande du tracteur (2) et / ou dans le logiciel de commande de l'équipement (4).

7. Procédé selon l'une quelconque des revendications précédentes, **caractérisé en ce que** le mode d'étalonnage se coupe automatiquement après l'atteinte d'un trajet de déplacement minimal du tracteur (2).

8. Procédé selon l'une quelconque des revendications précédentes, **caractérisé en ce que** le mode d'étalonnage se coupe lorsque le facteur de correction déterminé après l'écoulement d'un temps d'étalonnage prédéfini ou d'un trajet d'étalonnage prédéfini ne varie plus ou uniquement de manière négligeable, sous prise en compte d'autres signaux de vitesse et / ou de trajet lisibles sur l'interface ISOBUS (12) .

9. Procédé selon l'une quelconque des revendications précédentes, **caractérisé en ce qu'**après le trajet de déplacement minimal, le mode d'étalonnage doit être achevé par la saisie d'une instruction de commande dans le logiciel de commande du tracteur (2) et / ou de l'équipement (4).

10. Procédé selon l'une quelconque des revendications précédentes, **caractérisé en ce que** lors d'une panne ou d'une absence du capteur (16), l'UCE (8) de l'équipement (4) traite ultérieurement les signaux de vitesse et / ou de trajet lisibles sur l'interface ISOBUS (12) ou les valeurs de vitesse et / ou de trajet correspondant aux signaux de vitesse et / ou de trajet lus et / ou au lieu des valeurs de capteur du capteur (16) en tant que valeurs de capteur pour la vitesse actuellement pratiquée.

11. Procédé selon l'une quelconque des revendications précédentes, **caractérisé en ce que** le programme logiciel (20) comporte une fonction de sélection commandée automatiquement ou dépendante d'une saisie de commande, par l'intermédiaire de laquelle il peut être sélectionné si les valeurs de capteur du capteur (16) connecté avec l'UCE (8) ou les signaux de vitesse et / ou de trajet disponibles via une interface (12) à partir d'une autre source que le capteur (16) connecté avec l'UCE (8), reproduisant le déplacement en conduite sont traités ultérieurement par l'UCE (8) de l'équipement (4) pour déterminer la vitesse.

12. Equipement agricole (4), destiné à être monté sur un tracteur (2), l'équipement (4) comportant une UCE (8) destinée à commander et à régler des fonctions de travail de l'équipement (4) et un capteur (16), destiné à détecter la vitesse de déplacement actuelle, le capteur (16) étant raccordé sur l'UCE (8) de l'équipement pour commander et régler des fonctions de travail de l'équipement (4), et le capteur (16) étant conçu pour envoyer à l'UCE (8) des signaux de capteur, que l'UCE (8) de l'équipement (4) traite ultérieurement lors de processus de commande et de réglage commandés par logiciel en tant que valeurs de vitesse actuellement mesurées par le capteur (16) t, **caractérisé en ce que** l'UCE (8) de l'équipement (4) comporte une interface (12), via laquelle des signaux de vitesse et / ou de trajet reproduisant le déplacement en conduite du tracteur (2) peuvent être lues en tant que valeurs de référence, lesquelles sont rendues disponibles via un trajet de mesure dans un mode d'étalonnage à partir d'une autre source que le capteur (16) connecté avec l'UCE (8), et **en ce que** l'UCE (8) de l'équipement (4) comporte un programme logiciel (20), destiné à exécuter le procédé cité dans la revendication 1.

13. Equipement agricole (4) selon la revendication 12, **caractérisé en ce que** le programme logiciel (20) est conçu selon les caractéristiques de l'une quelconque ou de plusieurs des revendications 2 à 11 précédentes.
